# FASCICULE DE BREVET EUROPEEN

(11) **EP 1 571 782 B1**
(45) Date de publication et mention de la délivrance du brevet: **23.01.2008**
(21) Numéro de dépôt: 04290585.1
(22) Date de dépôt: 03.03.2004
(51) Int. Cl.: H04L 12/28, H04L 12/56

(54) **Procédé et dispositif de formation de règles de traitement d'une trame d'informations**
Verfahren und Vorrichtung zur Erzeugung von Regeln zur Behandlung eines Informationsrahmen
Method and apparatus for generating rules of treating an information frame

(43) Date de publication de la demande: 07.09.2005
(73) Titulaire: FRANCE TELECOM, 75015 Paris (FR)
(72) Inventeur: Minodier, David, 22560 Pleumeur Bodou (FR); Ivanoff, Gilles, 22560 Trebeurden (FR); Stephan, Emile, 22560 Pleumeur Bodou (FR)
(74) Mandataire: Maillet, Alain

(56) Documents cités:
- WO-A-00/54477
- US-A- 5 987 611
- US-A1- 2003 061 338
- US-B1- 6 553 375

## Description

La présente invention concerne un procédé et un dispositif de formation de règles de traitement d'une trame d'informations transitant entre deux réseaux de télécommunication.

L'invention se situe dans le domaine de la formation de règles de traitement de trames d'informations transitant entre deux réseaux de télécommunication en fonction de profils de clients d'un réseau de télécommunication.

Dans les réseaux d'accès à Internet, les clients sont classiquement reliés par l'intermédiaire de liaisons physiques dédiées avec un multiplexeur numérique de lignes de clients. Ces liaisons physiques dédiées sont par exemple des liaisons de type DSL. DSL est l'acronyme de « Digital Subscriber Line ». Le multiplexeur numérique de lignes de clients est connecté à un concentrateur de sessions PPP par l'intermédiaire d'un réseau de télécommunication. PPP est l'acronyme de « Point to Point Protocol ». Une session PPP est une session établie selon un protocole point à point. Un concentrateur de sessions PPP est classiquement appelé un BAS, acronyme de Broadband Access Server. Un concentrateur de sessions PPP achemine les sessions établies par les différents clients d'un réseau de collecte vers le réseau Internet et plus particulièrement vers le point de présence du fournisseur de services auquel ils sont abonnés.

Lorsqu'un client s'abonne à un fournisseur de services Internet, le client peut choisir un contrat dans lequel le débit de transfert d'informations émises ou reçues par le client est adapté à son budget et à ses besoins. Ce débit est défini manuellement par le personnel de l'opérateur du réseau de télécommunication au niveau du multiplexeur de lignes de clients. Si le contrat est modifié par le client, une intervention du personnel de l'opérateur du réseau de télécommunication est alors nécessaire au niveau du multiplexeur de lignes de clients pour redéfinir celui-ci. Le délai d'intervention du personnel est parfois long pour les clients. Lorsque le flux d'informations à destination d'un client ne correspond pas au contrat de trafic auquel le client est abonné, le multiplexeur numérique de lignes de clients auquel le client est relié ne transfère pas ces informations au client.

La demande de brevet WO 00/54477 divulgue un procédé d'allocation d'adresses IP à des clients, et certains des bits de l'adresse IP sont définis en fonction de la souscription à un service par le client.

La demande de brevet US 2003/061338 divulgue un procédé d'utilisation de règles de traitement d'une trame dans lequel on lit une adresse d'un client dans la trame d'informations reçue et on obtient, à partir d'une règle de traitement de la trame, le traitement à appliquer au paquet.

Ce traitement, lorsque le client reçoit des informations, est effectué une fois que les informations ont été reçues du réseau Internet et transférées par le concentrateur de sessions PPP à travers le réseau de télécommunication. Lorsque la quantité d'informations est supérieure au débit choisi par le client, ces informations encombrent inutilement le concentrateur de sessions PPP, le réseau de collecte car elles ne sont finalement pas transférées par le multiplexeur numérique de lignes de clients au client destinataire.

En même temps que le réseau Internet s'est déployé dans le monde, les attaques effectuées par des pirates de l'informatique ont augmenté. Afin de se protéger contre ces attaques, les clients doivent s'équiper de systèmes appelés pare-feu. Ces systèmes pare-feu détruisent les informations émises par les pirates de l'informatique. Ces systèmes pare-feu peuvent être intégrés dans l'équipement de raccordement du client ou dans un dispositif dédié chez le client. Les informations émises par les pirates de l'informatique encombrent inutilement le concentrateur de sessions PPP, le réseau de télécommunication et le multiplexeur numérique de lignes de clients car elles ne sont finalement pas traitées par le client.

L'invention a pour but de résoudre les inconvénients de l'art antérieur en proposant un procédé et un dispositif de formation de règles de traitement de trames d'informations transitant entre deux réseaux de télécommunication dans lesquels les règles de traitement sont formées dynamiquement. L'invention vise aussi à ce que les informations qui ne seront pas par la suite traitées par les clients bien que leur étant adressées ne seront pas transmises sur le réseau de télécommunication auquel les clients sont reliés. L'invention vise aussi à utiliser un réseau de collecte dans lequel il n'est pas nécessaire d'établir des sessions PPP à travers le réseau de télécommunication pour accéder aux services d'un fournisseur de services.

A cette fin, selon un premier aspect, l'invention propose un procédé de formation de règles de traitement d'une trame d'informations transitant entre deux réseaux de télécommunication par l'intermédiaire d'un dispositif de formation de règles, à un réseau de télécommunication sont reliés des clients par l'intermédiaire d'un multiplexeur numérique de lignes de clients, la trame d'informations étant destinée à au moins un client ou émise par un client relié au réseau de télécommunication, chaque client relié au réseau de télécommunication disposant d'une adresse différente des adresses des autres clients reliés au réseau de télécommunication, caractérisé en ce que le procédé comporte les étapes effectuées par le dispositif de formation de règles de :
- lecture d'une adresse d'un client dans la trame d'informations reçue par le dispositif de formation de règles,
- obtention d'un profil de client à partir de l'adresse lue, le profil comprenant des informations représentatives de services souscrits par le client,
- formation de règles de traitement de la trame d'informations à partir du profil du client obtenu.

Corrélativement, l'invention concerne un dispositif de formation de règles de traitement d'une trame d'informations transitant entre deux réseaux de télécommunication, à un réseau de télécommunication sont reliés des clients par l'intermédiaire d'un multiplexeur numérique de lignes de clients, la trame d'informations étant destinée à au moins un client ou émise par un client relié au réseau de télécommunication, chaque client relié au réseau de télécommunication disposant d'une adresse différente des adresses des autres clients reliés au réseau de télécommunication, caractérisé en ce que le dispositif de formation de règles comporte :
- des moyens de lecture d'une adresse d'un client dans la trame d'informations reçue par le dispositif de formation de règles,
- des moyens d'obtention d'un profil de client à partir de l'adresse lue, le profil comprenant des informations représentatives de services souscrits par le client,
- des moyens de formation de règles de traitement de la trame d'informations à partir du profil du client obtenu.

Ainsi les profils des clients sont traités dynamiquement. Lorsqu'un client reçoit ou émet une trame d'informations, le dispositif de formation de règles de traitement d'une trame d'informations obtient le profil associé à l'adresse contenue dans la trame et forme des règles de traitement de la trame d'informations. Toute modification du profil du client est prise en compte dès la réception d'une trame d'informations émise par le client ou à destination du client. Les règles de traitement peuvent ainsi être adaptées en temps réel.

Selon un autre aspect de l'invention, on traite la trame d'informations à partir des règles de traitement formées.

Ainsi, les trames d'informations qui transitent entre les deux réseaux de télécommunication sont traitées conformément aux services souscrits par le client émetteur ou destinataire de ces trames d'informations. Le traitement d'une trame d'informations avant son arrivée sur le réseau de télécommunication auquel sont reliés des clients, permet d'optimiser les ressources du réseau de télécommunication. La qualité de service est ainsi maintenue dans le réseau de collecte pour les clients et cela sans avoir à recourir à des sessions PPP.

Selon un autre aspect de l'invention, le profil de client est obtenu à partir d'une base de données comprenant les profils de clients reliés au réseau de télécommunication distante du dispositif de formation de règles ou à partir de la mémoire temporaire du dispositif de formation de règles.

Ainsi, en utilisant une base de données distante du dispositif de formation de règles et comprenant les profils de clients reliés au réseau de télécommunication, il est possible de centraliser toutes les informations relatives aux services souscrits par les différents clients et de modifier facilement cette base de données en fonction de l'évolution des clients en ce qui concerne les services auxquels ils s'abonnent. En utilisant la mémoire du dispositif de formation de règles comme moyen de mémorisation de profils de clients, le dispositif de formation de règles peut ainsi obtenir très rapidement le profil d'un client lorsqu'une trame d'informations doit être traitée et ainsi réduire de manière importante le délai de traitement de la trame d'informations.

Selon un autre aspect de l'invention, des profils de clients sont mémorisés dans la mémoire temporaire du dispositif de formation de règles et les profils de clients dont les adresses n'ont pas été lues dans une trame d'informations pendant un temps prédéterminé sont supprimés de la mémoire temporaire du dispositif de formation de règles.

Ainsi, seuls les profils des clients actifs sont mémorisés dans la mémoire du dispositif de traitement. La quantité de mémoire du dispositif de traitement allouée pour la mémorisation des profils est ainsi réduite.

Selon un autre aspect de l'invention, un service souscrit par le client est un service dans lequel au moins une application, parmi l'ensemble des applications du client, est autorisée ou non à recevoir des informations, à l'application autorisée ou non est associé un identifiant, au moins une partie de la trame d'informations est comprise dans un paquet de données comprenant au moins un identifiant de l'application du client destinataire de la trame d'informations, et si l'identifiant de l'application destinataire de la trame d'informations compris dans le paquet de données est l'identifiant de l'application autorisée ou non, la trame d'informations est transmise ou non sur le réseau de télécommunication auquel sont reliés les clients ou inversement dans le cas contraire.

Ainsi, seules certaines applications des clients sont accessibles et les risques liés à des attaques par des pirates de l'informatique sont réduits. De plus les informations générées par des pirates de l'informatique ne sont pas transmises dans le réseau de télécommunication.

Selon un autre aspect de l'invention, un service souscrit par le client est un service dans lequel la quantité d'informations transmise et/ou reçue par le client est limitée dans un intervalle de temps prédéterminé et si la quantité d'informations transmise et/ou reçue par le client est supérieure à une limite du service souscrit par le client, la trame n'est pas transmise sur le réseau de télécommunication auquel sont reliés les clients.

Ainsi, les informations qui ne seront pas par la suite traitées par les clients bien que leur étant adressées ne seront pas transmises sur le réseau de télécommunication auquel les clients sont reliés. De cette façon, le réseau de télécommunication est utilisé de manière optimale.

Selon un autre aspect de l'invention, si aucun profil n'est obtenu à partir de l'adresse lue, le procédé comporte une étape de traitement de la trame d'informations.

Ainsi, il est possible de traiter des trames d'informations telles que par exemple des trames de supervision du réseau de télécommunication.

Selon un autre aspect de l'invention, le réseau de télécommunication auquel sont reliés les clients est un réseau de collecte GigaEthernet ©, l'autre réseau de télécommunication est un réseau de type Internet et le dispositif de formation de règles est une passerelle.

Selon un autre aspect de l'invention, l'adresse du client est une adresse MAC ou une adresse IPv6 ou une adresse attribuée respectivement à chaque client par le multiplexeur numérique de lignes de clients.

L'invention concerne aussi le programme d'ordinateur stocké sur un support d'informations, ledit programme comportant des instructions permettant de mettre en oeuvre le procédé de formation de règles de traitement précédemment décrit, lorsqu'il est chargé et exécuté par un système informatique.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:
la Fig. 1 représente l'architecture du système de formation de règles de traitement de trames d'informations destinées ou émises par des clients d'un réseau de télécommunication;
la Fig. 2 représente un schéma bloc du dispositif de formation de règles de traitement de trames d'informations destinées ou émises par des clients d'un réseau de télécommunication ;
la Fig. 3 représente l'algorithme de formation de règles de traitement de trames d'informations destinées ou émises par des clients d'un réseau de télécommunication.

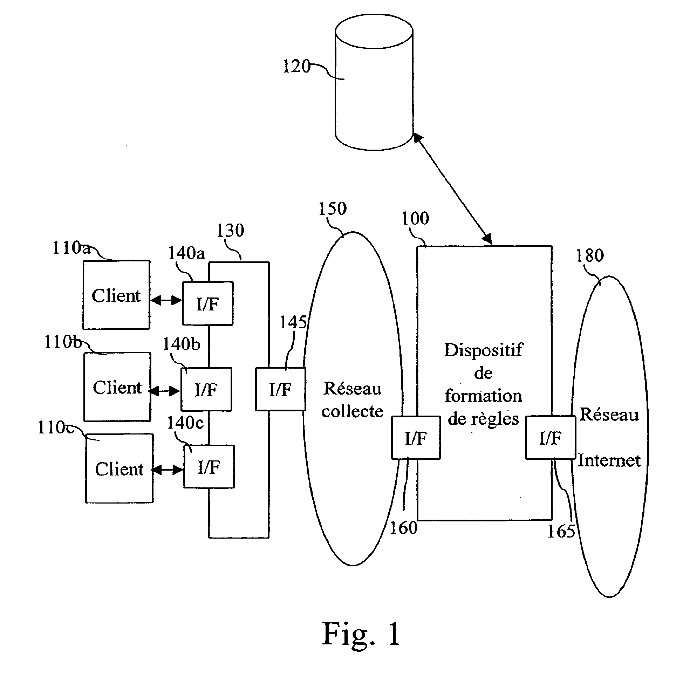

La Fig. 1 représente l'architecture du système de formation de règles de traitement de trames d'informations destinées ou émises par des clients d'un réseau de télécommunication.

Dans le système de formation de règles de traitement de trames d'informations destinées ou émises par des clients d'un réseau de télécommunication, des clients 110 accèdent à un réseau de type Internet 180 par l'intermédiaire d'un multiplexeur numérique de lignes de clients 130, d'un réseau de collecte 150 et d'un dispositif de formation de règles 100 qui traite les trames d'informations reçues du réseau Internet 180 ou à destination du réseau Internet 180 en fonction du profil des clients 110 qui émettent ou qui sont destinataires des trames d'informations. Le dispositif de formation de règles 100 est plus précisément une passerelle 100.

Le système de formation de règles de traitement de trames d'informations destinées ou émises par des clients d'un réseau de télécommunication comprend un multiplexeur numérique de lignes de clients 130. Le multiplexeur numérique de lignes de clients 130 est dans un mode préféré adapté à des liaisons physiques dédiées avec des clients 110a, 110b et 110c. Lorsque les liaisons sont de type DSL, le multiplexeur numérique de lignes de clients 130 est connu sous le terme DSLAM. DSLAM est l'acronyme de « Digital Subscriber Line Access Multiplexor ».

Le multiplexeur numérique de lignes de clients 130 a pour fonction de regrouper plusieurs lignes de clients 110a, 110b et 110c sur un support physique qui assure le transport des données échangées entre les clients 110a, 110b et 110c et le réseau Internet 180.

Les clients 110a, 110b et 110c sont plus précisément des terminaux de télécommunication et sont reliés au multiplexeur numérique de lignes de clients 130 par l'intermédiaire du réseau téléphonique filaire et utilisent les techniques de modulations de type DSL. Bien entendu d'autres types de liaisons physiques dédiées peuvent être utilisées. Par exemple et de manière non limitative, ces liaisons peuvent être aussi des liaisons sans fils ou des liaisons par fibres optiques.

Un client est par exemple un dispositif de télécommunication tel qu'un ordinateur comprenant une carte de communication adaptée à la liaison physique dédiée existant avec le multiplexeur numérique de lignes de clients 130 ou un ordinateur relié à un dispositif de communication externe adapté à la liaison physique dédiée existant avec le multiplexeur numérique de lignes de clients 130.

A chaque client 110a, 110b et 110c est alloué un identifiant ou adresse unique permettant de le distinguer des autres clients 110. Cette adresse est par exemple l'adresse MAC de l'interface physique de l'ordinateur client ou l'adresse MAC des interfaces logiques de l'ordinateur client. En variante, cette adresse est une adresse unique délivrée respectivement à chaque client par le multiplexeur numérique de lignes de clients 130 afin de masquer l'adresse réelle du client 110. Dans une autre variante, cette adresse est une adresse IPv6 lorsque le protocole IPv6 est utilisé.

En Fig. 1 seulement trois clients 110a, 110b et 110c sont représentés, bien entendu, un nombre plus important de clients 110 sont reliés au multiplexeur numérique de lignes de clients 130.

Chaque client 110 est relié à un multiplexeur numérique de lignes de clients 130 qui est lui-même connecté par l'intermédiaire du réseau de collecte 150 à un dispositif de formation de règles 100. Le dispositif de formation de règles 100 est une passerelle entre le réseau de collecte 150 et le réseau Internet 180.

Le multiplexeur numérique de lignes de clients 130 dispose préférentiellement d'interfaces DSL 140a, 140b et 140c reliées respectivement aux clients 110a, 110b et 110c. Le multiplexeur numérique de lignes de clients 130 autorise l'accès aux services proposés par les fournisseurs de services à Internet, par exemple aux clients 110a 110b et 110c, si ceux-ci se sont correctement identifiés et si leur identification a été validée par un serveur d'authentification associé à leur fournisseur de service Internet. Le multiplexeur numérique de lignes de clients 130 comporte une interface réseau 145 le reliant au réseau de collecte 150.

Le réseau de collecte 150 est par exemple un réseau de type GigaEthernet ©. Les trames d'informations transmises à travers le réseau de collecte 150 sont des trames Ethernet. Dans le réseau de collecte 150, les clients 110 ne doivent pas établir des sessions établies selon un protocole point à point afin de pouvoir accéder au réseau Internet 180. Il est à remarquer ici que les adresses source et destination comprises dans ces trames d'informations ne sont pas modifiées au cours de l'acheminement des trames d'informations dans le réseau de collecte 150.

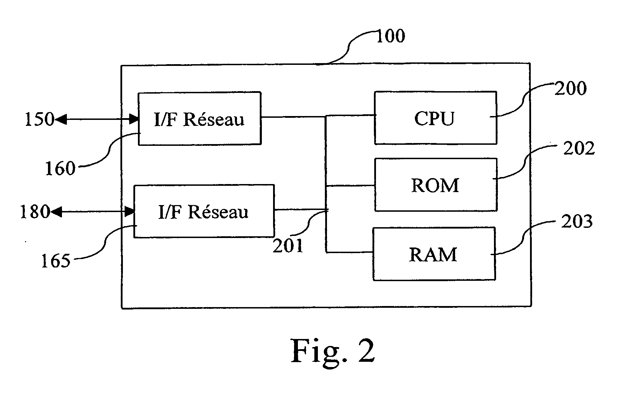

Le dispositif de formation de règles 100 traite les informations reçues du réseau Internet 180 en fonction du profil des clients 110 destinataires ou émetteurs de ces informations. Plus précisément, le dispositif de formation de règles 100 forme à partir du profil des clients 110 un ensemble de règles sous la forme de listes d'accès ou « Access List », de classes et de disciplines de service, de filtres, qui sont appliqués sur les trames d'informations qui ont l'adresse correspondant à la liste d'accès ou aux filtres. Le dispositif de formation de règles 100 comporte une interface réseau 160 le reliant au réseau de collecte 150 ainsi qu'une interface réseau 165 le reliant au réseau Internet 180. Le dispositif de formation de règles 100 sera décrit plus en détail à la référence à la Fig. 2.

Au dispositif de formation de règles 100 est associée une base de données 120 qui comprend les profils associés aux différents clients 110. Un profil est formé pour chaque client 110 lorsque le client 110 s'abonne à un fournisseur de services. Un profil comprend par exemple et de manière non limitative les débits entrant et sortant d'informations alloués au client selon le type de service auquel le client 110 a souscrit. Ces débits peuvent être des débits maximums et/ou des débits minimums garantis et cela dans chaque sens de transfert des informations. Un profil comprend aussi des informations de sécurité liées au client 110. Ces informations indiquent le ou les ports des applications dont dispose un client 110 et qui sont autorisées à transmettre et/ou recevoir des données issues du réseau Internet 180. Ces applications sont par exemples des serveurs de type FTP, acronyme de « File Transfert Protocol » ou des serveurs WEB qui mettent à la disposition des pages WEB selon le protocole HTTP. Ces profils comportent aussi l'identifiant du fournisseur de services Internet auquel les clients sont abonnés.

Il est à remarquer ici qu'en variante, le réseau de collecte 150 peut être relié à un concentrateur de sessions PPP (non représenté en Fig. 1), qui établit des sessions PPP avec d'autres clients (non représentés en Fig. 1) par l'intermédiaire d'un réseau de télécommunication et d'au moins un multiplexeur numérique de lignes de clients (non représentés en Fig. 1). Le concentrateur de sessions PPP assure dans cette variante la mise en forme des informations émises par ces clients selon le protocole PPP en trames Ethernet avant de transférer celles-ci sur le réseau de collecte 150 et réciproquement.

La Fig. 2 représente un schéma bloc du dispositif de formation de règles de traitement de trames d'informations destinées ou émises par des clients d'un réseau de télécommunication.

Le dispositif de formation de règles 100 comporte un bus de communication 201 auquel sont reliées une unité centrale 200, une mémoire non volatile 202, une mémoire vive 203, une interface clients 205 et une interface réseau 206.

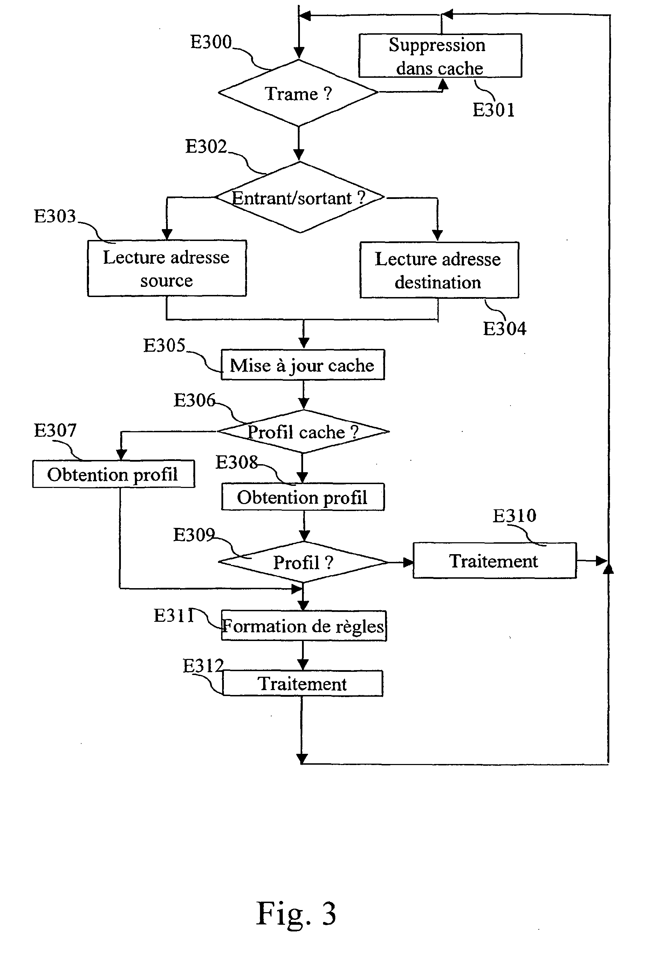

La mémoire non volatile 202 mémorise les programmes mettant en oeuvre l'invention ainsi que l'algorithme qui sera décrit ultérieurement en référence à la Fig. 3. La mémoire non volatile 302 est par exemple un disque dur. De manière plus générale, les programmes selon la présente invention sont mémorisés dans un moyen de stockage. Ce moyen de stockage est lisible par un ordinateur ou un microprocesseur 200. Ce moyen de stockage est intégré ou non au dispositif d'application de profils 100, et peut être amovible. Lors de la mise sous tension du dispositif de formation de règles 100, les programmes sont transférés dans la mémoire vive 203 qui contient alors le code exécutable de l'invention ainsi que les données nécessaires à la mise en oeuvre de l'invention.

Le dispositif de formation de règles 100 comporte aussi une interface réseau de télécommunication 165. Cette interface permet le transfert d'informations de et/ou vers le réseau Internet 180. L'interface réseau 160 relie le dispositif de formation de règles 100 au réseau de collecte 150.

Le processeur 200 est apte à autoriser ou non le transfert de données entre le réseau Internet 180 et les clients 110 selon les règles de traitement de trames d'informations formées à partir du profil mémorisé dans la base de données 120.

Cette base de données 120 est reliée au dispositif de formation de règles 100 par l'intermédiaire du réseau de télécommunication 150 ou du réseau de télécommunication 180, voire par l'intermédiaire d'une liaison dédiée.

Il est à remarquer que la base de données 120 peut aussi être, en variante intégrée dans le multiplexeur numérique de lignes de clients 130.

La Fig. 3 représente l'algorithme de formation de règles de traitement de trames d'informations destinées ou émises par des clients d'un réseau de télécommunication.

A l'étape E300, le processeur 200 du dispositif de formation de règles 100 vérifie si une trame d'informations est reçue sur l'interface réseau 160 ou 165. Les trames sont préférentiellement des trames de type Ethernet ou des trames de type IPv6.

Dans la négative, le processeur 200 passe à l'étape E301. A cette étape, le processeur 200 vérifie si l'heure respective associée à chaque adresse comprise dans la mémoire cache du dispositif de formation de règles 100 est considérée comme trop ancienne. Il est à remarquer que la mémoire cache est par exemple et de manière non limitative inclue dans la mémoire vive 203. En effet, le procédé selon la présente invention supprime de la mémoire cache les adresses des clients qui sont inactifs pendant un temps prédéterminé. Lorsque ces différentes opérations ont été effectuées, le processeur 200 retourne à l'étape E300 précédemment décrite.

Lorsqu'une trame d'informations est reçue à l'étape E300, le processeur 200 passe à l'étape E302. Le processeur 200 vérifie si cette trame est une trame entrante, c'est-à-dire issue du réseau Internet 180 ou si cette trame est une trame sortante, c'est-à-dire issue du réseau de collecte 150. Lorsque la trame est une trame entrante reçue par l'interface réseau 165, le processeur 200 lit, à l'étape E304, dans un champ prédéterminé de la trame d'informations, l'adresse de destination de la trame d'informations. Cette opération effectuée, le processeur 200 passe à l'étape suivante E305.

Lorsque la trame est une trame sortante reçue par l'interface réseau 160, le processeur 200 lit, à l'étape E303, dans un champ prédéterminé de la trame d'informations, l'adresse source de la trame d'informations. Cette opération effectuée, le processeur 200 passe à l'étape suivante E305.

A l'étape E305, le processeur 200 met à jour la mémoire cache du dispositif de formation de règles 100. Cette mémoire cache est comprise dans la mémoire vive 203 du dispositif de formation de règles 100. Dans la mémoire cache est mémorisé l'ensemble des adresses source ou destination lues par le processeur 200 lors de précédents passages à l'étape E303 ou E304. Lorsque l'adresse précédemment lue à l'étape E303 ou E304 n'existe pas dans la mémoire cache, le processeur 200 met à jour la mémoire cache du dispositif de formation de règles 100 en incluant celle-ci ainsi qu'une heure associée à l'adresse. Cette heure associée à l'adresse est l'heure de l'inclusion de l'adresse dans la mémoire cache.

Lorsque l'adresse précédemment lue à l'étape E303 ou E304 est déjà présente dans la mémoire cache, le processeur 200 met à jour la mémoire cache du dispositif de formation de règles 100 en remplaçant l'heure d'inclusion de l'adresse par l'heure courante du dispositif de formation de règles 100. Cette heure courante constitue alors l'heure associée à l'adresse. Les étapes E301 et E305 constituent un mécanisme de gestion de la durée de vie des adresses mémorisées dans la mémoire cache.

Selon un mode préféré de réalisation, le processeur 200 mémorise en association avec l'adresse, des informations telles que le numéro de port de l'application destinatrice de la trame d'informations ou l'adresse du fournisseur de services destinataire de la trame d'informations dans le réseau de télécommunication 180. Un numéro de port est obtenu en lisant des champs prédéterminés de paquets conformes au protocole IP, TCP/IP ou UDP comprenant les trames Ethernet comprenant les adresses. TCP/IP est l'acronyme de Transmission Control Protocol/ Internet Protocol, UDP est l'acronyme de User Datagram Protocol.

Cette opération effectuée, le processeur 200 vérifie à l'étape E306 s'il existe un profil associé à l'adresse précédemment lue dans la mémoire cache du dispositif de formation de règles 100. S'il existe un profil associé à l'adresse précédemment lue dans la mémoire cache, le processeur 200 passe ensuite à l'étape E307 et lit le profil du client dans la mémoire cache. Le processeur 200 passe ensuite à l'étape E311.

Il est à remarquer ici qu'en variante, si le profil du client est présent dans la mémoire cache du dispositif de formation de règles 100 depuis un temps prédéterminé, par exemple 24 heures, le processeur 200 effectue l'étape E308 à la place de l'étape E307.

S'il n'existe pas dans la mémoire cache de profil associé à l'adresse précédemment lue, le processeur 200 passe ensuite à l'étape E308. Le processeur 200 commande à l'étape E308 l'obtention du profil du client dont l'adresse a été lue aux étape E303 ou E304. Plus précisément, le processeur 200 commande la génération d'une requête pour l'obtention du profil du client dont l'adresse a été lue aux étape E303 ou E304. Le profil du client est mémorisé dans la base de données 120. Pour cela, le dispositif de formation de règles 100 comprend un module logiciel client par exemple un module RADIUS qui émet des requêtes d'obtention de profil à la base de données 120 qui est dans cet exemple un serveur de type RADIUS 120. RADIUS est l'acronyme de « Remote Authentification Dial In User Service ». La base de données 120, à partir de l'adresse communiquée par le dispositif de formation de règles 100, identifie le profil du client ayant la même adresse que l'adresse transférée par le dispositif de formation de règles 100 et transfère en retour les différentes informations comprises dans le profil.

Le profil comprend les règles de sécurité que le client 110 a choisi. Ces règles de sécurité sont par exemple des règles visant à autoriser ou non le transfert de trames d'informations à destination d'une ou plusieurs applications du client 110. Le profil comprend aussi des informations décrivant le ou les débits que le client a choisi lors de son abonnement à un fournisseur de services. Les informations décrivant le ou les débits choisis par le client 110 sont le contrat de trafic établi entre le client et le fournisseur de services.

Cette opération effectuée, le processeur 200 passe à l'étape suivante E309. A cette étape, le processeur 200 vérifie si un profil a été transféré en réponse par la base de données 120. Si aucun profil a été transféré, le processeur 200 passe à l'étape E310.

A l'étape E310, le processeur 200 effectue un traitement sur la trame reçue à l'étape E300. Cette trame est par exemple une trame de supervision du réseau et n'est pas destinée à un client 110, mais aux différents éléments du réseau de collecte 150. Le traitement est par exemple un transfert de la trame reçue à l'étape E300 sur le réseau de collecte 150. Cette opération effectuée, le processeur 200 retourne à l'étape E300 en attente d'une nouvelle trame d'informations à traiter.

Si un profil a été transféré, le processeur 200 passe de l'étape E309 à l'étape E311. A cette étape, le processeur 200 forme à partir des différentes informations contenues dans le profil obtenu à l'étape E307 ou E308 un ensemble de règles de traitement d'une trame d'informations sous la forme de listes d'accès ou « Access List », de filtres, de classes et de disciplines de service qui sont appliquées sur les trames d'informations qui ont l'adresse correspondant celle de la liste d'accès ou des filtres. Une liste d'accès est par exemple de la forme suivante :
« acl acl_100 accept ip src any dst 10.10.0.1 sp any dp 80»
« acl acl_100 deny ip src any dst 10.10.0.1 sp any dp 90»

La liste d'accès 100 comprend ici deux règles. La première règle autorise les trames d'informations en provenance de quiconque (any) et à destination du client 10.10.0.1 sur le port destination 80. La seconde règle rejette les trames d'informations en provenance de quiconque (any) et à destination du client 10.10.0.1 sur le port destination 90.

Le processeur 200 forme, à partir des différentes informations représentatives de débit contenues dans le profil obtenu à l'étape E307 ou E308, une classe de service décrivant le contrat de trafic du client 110. Les trames d'informations traitées par la classe de service sont ensuite transférées sur le réseau de collecte 150 ou le réseau Internet 180 conformément au contrat de service décrit dans la définition de la classe de service. Il est à remarquer ici que ces trames d'informations sont préalablement à leur transfert, placées dans une file d'attente. Le processeur 200 commande alors un algorithme d'application de la discipline de service. L'algorithme d'application de la discipline de service assure le transfert des trames d'informations placées dans la file d'attente sur le réseau collecte 150 ou le réseau Internet 180.

A titre d'exemple et de manière non limitative, le client 110a dispose d'un abonnement à un fournisseur de services dont le débit maximum est de 8 Mégabits par seconde. Le client 110a dispose de deux serveurs, un serveur VIDEO et un serveur WEB accessibles par des tiers. Le client 110a, afin qu'une certaine qualité dans la transmission de vidéo soit garantie, a choisi un contrat stipulant qu'un débit de 7,8 Mégabits par seconde doit être garanti pour le serveur vidéo. Le serveur Web quand à lui, ne dispose alors que d'un débit garanti de 200 Kilobits. Ces informations sont comprises dans le profil de l'abonné 110a mémorisé dans la base de données 120.

Le processeur 200 à partir de ce profil, forme les règles d'application suivantes :
REGLE Client_110a_WEB ip src any dest IP_CLIENT_110a TCP sport any dport WEB_PORT
REGLE Client_110a_VIDEO ip src any dest IP_CLIENT_110a UDP sport any dport VIDEO_PORT

La première règle décrit les paquets IP à destination du serveur WEB du client 110a et en provenance de quiconque.

La seconde règle décrit les paquets IP à destination du serveur VIDEO du client 110a en provenance de quiconque.

Le processeur 200 à partir du profil obtenu, créé les classes de services associées :
Service_Class name 200_kbits rate strict 200kbits/s burst 0
Service_Class name 7800_kbits rate strict 7800kbits/s burst 0

Finalement, le processeur 200 forme les associations suivantes entre les descripteurs de type de trafics et les classes :
Apply regle Client_110a_WEB to Service_Class 200_kbits
Apply regle Client_110a_VIDEO to Service_Class 7800_kbits

Lorsque le processeur 200 a formé les règles de traitement à partir du profil du client 110, le processeur 200 passe à l'étape suivante E312.

A cette étape, la trame d'informations est traitée selon les règles de traitement préalablement formées. Le traitement consiste alors en un transfert de la trame d'informations à destination du réseau 150 ou 180 ou à un rejet de celle-ci.

Selon l'exemple précédent, les paquets conformes à la règle Client_110a_WEB sont dirigés dans la classe de service 200_kbits, tandis que les paquets conformes à la règle Client_1 10a_VIDEO sont dirigés dans la classe de service 7800_kbits.

## Revendications

1. Procédé de formation de règles de traitement d'une trame d'informations transitant entre deux réseaux de télécommunication (150, 180) par l'intermédiaire d'un dispositif de formation de règles (100), à un réseau de télécommunication (150) sont reliés des clients (110) par l'intermédiaire d'un multiplexeur numérique de lignes de clients (130), la trame d'informations étant destinée à au moins un client ou émise par un client relié au réseau de télécommunication (150), chaque client relié au réseau de télécommunication disposant d'une adresse différente des adresses des autres clients reliés au réseau de télécommunication, **caractérisé en ce que** le procédé comporte les étapes effectuées par le dispositif de formation de règles à chaque trame reçue de :
- lecture (E303, E304) d'une adresse d'un client dans la trame d'informations reçue par le dispositif de formation de règles,
- obtention (E307, E308) d'un profil de client à partir de l'adresse lue dans la trame, le profil comprenant des informations représentatives de services souscrits par le client,
- formation (E311) de règles de traitement de la trame d'informations reçue à partir du profil du client obtenu pour prendre en compte une modification du profil de client.

2. Procédé selon la revendication 1, **caractérisé en ce que** le procédé comporte une étape de traitement (E312) de la trame d'informations à partir des règles de traitement formées.

3. Procédé selon la revendication 1 ou 2, **caractérisé en ce que** le profil de client est obtenu à partir d'une base de données (120) comprenant les profils de clients reliés au réseau de télécommunication distante du dispositif de formation de règles ou à partir de la mémoire temporaire du dispositif de formation de règles.

4. Procédé selon la revendication 3, **caractérisé en ce que** des profils de clients sont mémorisés dans la mémoire temporaire du dispositif de formation de règles et les profils de clients dont les adresses n'ont pas été lues dans une trame d'informations pendant un temps prédéterminé sont supprimés (E301) de la mémoire temporaire du dispositif de formation de règles.

5. Procédé selon l'une quelconque des revendications 1 à 4, **caractérisé en ce qu'**un service souscrit par le client est un service dans lequel au moins une application, parmi l'ensemble des applications du client, est autorisée ou non à recevoir des informations, à l'application autorisée ou non est associé un identifiant et **en ce que** au moins une partie de la trame d'informations est comprise dans un paquet de données comprenant au moins un identifiant de l'application du client destinataire de la trame d'informations, et si l'identifiant de l'application destinataire de la trame d'informations compris dans le paquet de données est l'identifiant de l'application autorisée ou n'est pas l'identifiant de l'application non autorisée, la trame d'informations est transmise sur le réseau de télécommunication auquel sont reliés les clients ou inversement dans le cas contraire.

6. Procédé selon l'une quelconque des revendications 1 à 5, **caractérisé en ce qu'**un service souscrit par le client est un service dans lequel la quantité d'informations transmise et/ou reçue par le client est limitée dans un intervalle de temps prédéterminé et **en ce que** si la quantité d'informations transmise et/ou reçue par le client est supérieure à une limite du service souscrit par le client, la trame n'est pas transmise sur le réseau de télécommunication auquel sont reliés les clients.

7. Procédé selon l'une quelconque des revendications 1 à 6, **caractérisé en ce que** si aucun profil n'est obtenu à partir de l'adresse lue, le procédé comporte une étape de traitement de la trame d'informations.

8. Procédé selon l'une quelconque des revendications 1 à 7, **caractérisé en ce que** le réseau de télécommunication auquel sont reliés les clients est un réseau de collecte GigaEthernet ©, l'autre réseau de télécommunication est un réseau de type Internet et le dispositif de formation de règles est une passerelle.

9. Procédé selon la revendication 8, **caractérisé en ce que** l'adresse du client est une adresse MAC ou une adresse IPv6 ou une adresse attribuée respectivement à chaque client par le multiplexeur numérique de lignes de clients.

10. Dispositif de formation de règles de traitement d'une trame d'informations transitant entre deux réseaux de télécommunication, à un réseau de télécommunication sont reliés des clients par l'intermédiaire d'un multiplexeur numérique de lignes de clients, la trame d'informations étant destinée à au moins un client ou émise par un client relié au réseau de télécommunication, chaque client relié au réseau de télécommunication disposant d'une adresse différente des adresses des autres clients reliés au réseau de télécommunication, **caractérisé en ce que** le dispositif de formation de règles comporte
- des moyens de lecture d'une adresse d'un client dans chaque trame d'informations reçue par le dispositif de formation de règles,
- des moyens d'obtention d'un profil de client à partir de chaque adresse lue, chaque profil comprenant des informations représentatives de services souscrits par le client,
- des moyens de formation de règles de traitement de la trame d'informations à partir de chaque profil due client obtenu pour prendre en compte une modification du profil de client.

11. Programme d'ordinateur stocké sur un support d'informations, ledit programme comportant des instructions permettant de mettre en oeuvre les étapes du procédé selon l'une quelconque des revendications 1 à 9, lorsqu'il est chargé et exécuté par un système informatique.

## Claims

1. Method of forming processing rules for an information frame passing between two telecommunication networks (150, 180) via a rule-forming device (100), customers (110) being linked to a telecommunication network (150) via a customer line digital multiplexer (130), the information frame being intended for at least one customer or sent by a customer linked to the telecommunication network (150), each customer linked to the telecommunication network having an address that is different from the addresses of the other customers linked to the telecommunication network, **characterized in that** the method comprises the following steps performed by the rule-forming device for each frame received :
- reading (E303, E304) an address of a customer in the information frame received by the rule-forming device,
- obtaining (E307, E308) a customer profile from the address read in the frame, the profile comprising information representative of services subscribed to by the customer,
- forming (E311) processing rules for the received information frame based on the obtained customer profile so as to take into account a modification of the customer profile.

2. Method according to Claim 1, **characterized in that** the method comprises a step (E312) for processing the information frame based on the duly formed processing rules.

3. Method according to Claim 1 or 2, **characterized in that** the customer profile is obtained from a database (120) comprising the profiles of customers linked to the telecommunication network remote from the rule-forming device or obtained from the temporary memory of the rule-forming device.

4. Method according to Claim 3, **characterized in that** the customer profiles are stored in the temporary memory of the rule-forming device and the profiles of customers whose addresses have not been read in an information frame for a predetermined time are deleted (E301) from the temporary memory of the rule-forming device.

5. Method according to any one of Claims 1 to 4, **characterized in that** a service subscribed to by the customer is a service in which at least one application, out of all the applications of the customer, is authorized or not authorized to receive information, the authorized or unauthorized application has an associated identifier, and **in that** at least a part of the information frame is included in a data packet including at least an identifier of the application of the customer receiving the information frame, and if the identifier of the application receiving the information frame included in the data packet is the identifier of the authorized application or is not the identifier of the unauthorized application, the information frame is transmitted over the telecommunication network to which the customers are linked, or vice versa otherwise.

6. Method according to any one of Claims 1 to 5, **characterized in that** a service subscribed to by the customer is a service in which the quantity of information transmitted and/or received by the customer is limited in a predetermined time slot and **in that** if the quantity of information transmitted and/or received by the customer is greater than a service limit subscribed to by the customer, the frame is not transmitted over the telecommunication network to which the customers are linked.

7. Method according to any one of Claims 1 to 6, **characterized in that** if no profile is obtained from the address read, the method includes a step for processing the information frame.

8. Method according to any one of Claims 1 to 7, **characterized in that** the telecommunication network to which the customers are linked is a GigaEthernet© access network, the other telecommunication network is an Internet-type network and the rule-forming device is a gateway.

9. Method according to Claim 8, **characterized in that** the address of the customer is an MAC address or an IPv6 address or an address assigned respectively to each customer by the customer line digital multiplexer.

10. Device for forming processing rules for an information frame passing between two telecommunication networks, customers (110) being linked to a telecommunication network (150) via a customer line digital multiplexer (130), the information frame being intended for at least one customer or sent by a customer linked to the telecommunication network, each customer linked to the telecommunication network having an address that is different from the addresses of the other customers linked to the telecommunication network, **characterized in that** the rule-forming device comprises:
- means of reading an address of a customer in each information frame received by the rule-forming device,
- means of obtaining a customer profile from each address read, each profile comprising information representative of services subscribed to by the customer,
- means of forming processing rules for the information frame from each customer profile obtained to take account of a modification of the customer profile.

11. Computer program stored on an information medium, said program comprising instructions making it possible to implement the steps of the method according to any one of Claims 1 to 9, when it is loaded and run by an information processing system.

## Patentansprüche

1. Verfahren zur Bildung von Verarbeitungsregeln eines Rahmens von Informationen, die zwischen zwei Telekommunikationsnetzen (150, 180) übertragen werden, mittels einer Regelbildungsvorrichtung (100), wobei Kunden (110) mittels eines digitalen Kundenleitungsmultiplexers (130) an einem Telekommunikationsnetz (150) verbunden sind, wobei der Informationsrahmen für mindestens einen Kunden bestimmt ist oder von einem mit dem Telekommunikationsnetz (150) verbundenen Kunden gesendet wird, wobei jeder mit dem Telekommunikationsnetz verbundene Kunde über eine eigene Adresse verfügt, die sich von den Adressen der anderen mit dem Telekommunikationsnetz verbundenen Kunden unterscheidet, **dadurch gekennzeichnet, dass dadurch gekennzeichnet, dass** das Verfahren die Schritte aufweist, die von der Regelbildungsvorrichtung bei jedem empfangenen Rahmen ausgeführt werden:
- Lesen (E303, E304) einer Adresse eines Kunden im von der Regelbildungsvorrichtung empfangenen Informationsrahmen,
- Erhalt (E307, E308) eines Kundenprofils ausgehend von der im Rahmen gelesenen Adresse, wobei das Profil Informationen enthält, die für vom Kunden abonnierte Dienste repräsentativ sind,
- Bildung (E311) von Verarbeitungsregeln des empfangenen Informationsrahmens ausgehend vom erhaltenen Profil des Kunden, um eine Änderung des Kundenprofils zu berücksichtigen.

2. Verfahren nach Anspruch 1, **dadurch gekennzeichnet, dass** es einen Schritt der Verarbeitung (E312) des Informationsrahmens ausgehend von den gebildeten Verarbeitungsregeln aufweist.

3. Verfahren nach Anspruch 1 oder 2, **dadurch gekennzeichnet, dass** das Kundenprofil ausgehend von einer die Profile von mit dem Telekommunikationsnetz verbundenen Kunden enthaltenden Datenbank (120), die fern von der Regelbildungsvorrichtung ist, oder ausgehend vom Zwischenspeicher der Regelbildungsvorrichtung erhalten wird.

4. Verfahren nach Anspruch 3, **dadurch gekennzeichnet, dass** Kundenprofile im Zwischenspeicher der Regelbildungsvorrichtung gespeichert werden, und die Kundenprofile, deren Adressen in einem Informationsrahmen während einer vorbestimmten Zeit nicht gelesen wurden, aus dem Zwischenspeicher der Regelbildungsvorrichtung gelöscht werden (E301).

5. Verfahren nach einem der Ansprüche 1 bis 4, **dadurch gekennzeichnet, dass** ein vom Kunden abonnierter Dienst ein Dienst ist, in dem mindestens eine Anwendung aus der Gesamtheit von Anwendungen des Kunden berechtigt ist oder nicht, Informationen zu empfangen, der berechtigten oder nicht berechtigten Anwendung eine Kennung zugeordnet ist, und dass mindestens ein Teil des Informationsrahmens in einem Datenpaket enthalten ist, das mindestens eine Kennung der Anwendung des den Informationsrahmen empfangenden Kunden enthält, und wenn die im Datenpaket enthaltene Kennung der den Informationsrahmen empfangenden Anwendung die Kennung der berechtigten Anwendung oder nicht die Kennung der nicht berechtigten Anwendung ist, der Informationsrahmen an das Telekommunikationsnetz übertragen wird, mit dem die Kunden verbunden sind, oder umgekehrt im gegenteiligen Fall.

6. Verfahren nach einem der Ansprüche 1 bis 5, **dadurch gekennzeichnet, dass** ein vom Kunden abonnierter Dienst ein Dienst ist, in dem die vom Kunden übertragene und/oder empfangene Menge von Informationen in einem vorbestimmten Zeitintervall begrenzt ist, und dass, wenn die vom Kunden übertragene und/oder empfangene Menge von Informationen größer ist als ein Grenzwert des vom Kunden abonnierten Diensts, der Rahmen nicht an das Telekommunikationsnetz übertragen wird, mit dem die Kunden verbunden sind.

7. Verfahren nach einem der Ansprüche 1 bis 6, **dadurch gekennzeichnet, dass** es, wenn kein Profil ausgehend von der gelesenen Adresse erhalten wird, einen Schritt der Verarbeitung des Informationsrahmens enthalt.

8. Verfahren nach einem der Ansprüche 1 bis 7, **dadurch gekennzeichnet, dass** das Telekommunikationsnetz, mit dem die Kunden verbunden sind, ein Sammelnetz GigaEthernet © ist, während das andere Telekommunikationsnetz ein Netz vom Typ Internet und die Regelbildungsvorrichtung ein Gateway ist.

9. Verfahren nach Anspruch 8, **dadurch gekennzeichnet, dass** die Adresse des Kunden eine MAC-Adresse oder eine IPv6-Adresse oder eine Adresse ist, die jedem Kunden vom digitalen Kundenleitungsmultiplexer zugeteilt wird.

10. Vorrichtung zur Bildung von Verarbeitungsregeln eines Rahmens von Informationen, die zwischen zwei Telekommunikationsnetzen übertragen werden, wobei Kunden (110) mittels eines digitalen Kundenleitungsmultiplexers (130) an einem Telekommunikationsnetz (150) verbunden sind, wobei der Informationsrahmen für mindestens einen Kunden bestimmt ist oder von einem mit dem Telekommunikationsnetz verbundenen Kunden gesendet wird, wobei jeder mit dem Telekommunikationsnetz verbundene Kunde über eine Adresse verfügt, die sich von den Adressen der anderen mit dem Telekommunikationsnetz verbundenen Kunden unterscheidet, **dadurch gekennzeichnet, dass** die Regelbildungsvorrichtung aufweist:
- Mittel zum Lesen einer Adresse eines Kunden in jedem von der Regelbildungsvorrichtung empfangenen Informationsrahmen,
- Mittel für den Erhalt eines Kundenprofils ausgehend von jeder gelesenen Adresse, wobei jedes Profil Informationen enthält, die für vom Kunden abonnierte Dienste repräsentativ sind,
- Mittel zur Bildung von Verarbeitungsregeln des Informationsrahmens ausgehend von jedem erhaltenen Kundenprofil, um eine Änderung des Kundenprofils zu berücksichtigen.

11. In einem Informationsträger gespeichertes Computerprogramm, wobei das Programm Anweisungen enthält, die es ermöglichen, die Schritte des Verfahrens nach einem der Ansprüche 1 bis 9 auszuführen, wenn es von einem Informatiksystem geladen und ausgeführt wird.
